# EUROPEAN PATENT APPLICATION

(11) **EP 4 647 949 A1**
(43) Date of publication of application: **12.11.2025**
(21) Application number: 25172664.2
(22) Date of filing: 25.04.2025
(51) Int. Cl.: G06F 21/55, G06F 21/56, G06N 20/00

(54) **SYSTEMS AND METHODS FOR TEXT CLASSIFICATION**

(30) Priority: 10.05.2024 US 202418661149
(71) Applicant: Gen Digital Inc., Tempe, AZ 85281 (US)
(72) Inventor: PEVNY , Tomá, 14700 Prague (CZ); SOMOL, Petr, 35301 Mariánske Lázn (CZ); BELAK, Václav, 58263 Havlí kova Borová (CZ); SOPIK, Bretislav, 59101 ár nad Sázavou 1 (CZ)
(74) Representative: D Young & Co LLP

(57) **Abstract**

A computer-implemented method for text classification may include prompting, by a computing device, a large language model (LLM) to extract a set of explanatory statements for a training dataset, wherein each explanatory statement describes a difference between a grouping of samples within the training dataset. The method may also include prompting, by the computing device, the LLM to generate a set of queries based on the set of explanatory statements, wherein each query evaluates the difference described by an explanatory statement. The method may include training, by the computing device, a machine-learning (ML) model using the set of queries as features. Furthermore, the method may include classifying, by the computing device using the ML model, an unknown sample as a security threat. Finally, the method may include performing, by the computing device, a security action to mitigate the security threat. Various other methods, systems, and computer-readable media are also disclosed.

## Description

### BACKGROUND

With an increase in the variety of messages, advertisements, and other types of documents that users may encounter online, malicious content can be increasingly difficult to detect. For example, email systems may have trouble automatically distinguishing between legitimate emails and spam messages, particularly when the only distinguishing factors are subtle differences in the text of the messages. In some scenarios, misclassifying such data can have severe consequences. For example, incorrectly flagging benign messages as spam may cause users to miss important information, and allowing malicious messages to reach users may create opportunities for malware or scams to succeed.

Techniques for text mining and natural language processing can attempt to parse language to identify different attributes and characteristics that may improve automated classification and processing of text documents. In particular, methods such as large language models can provide powerful text processing with ease of use, with auto-regressive models capable of combining the power of syntactic understanding of text with accumulated knowledge gathered from a variety of sources. However, such methods can generate false information, or "hallucinations," that appear real and have a high confidence in decision-making processes. In other words, large language models may be prone to unexplained errors that are difficult to distinguish from legitimate output, thereby making these models risky to use in high-precision problem solving such as cybersecurity. Additionally, when data is classified as malicious text, users may want to review the text or to understand the reasons for the classification. Traditional methods may not have readily-available explanations that are easily understood by users. The present disclosure, therefore, identifies and addresses a need for systems and methods for accurately classifying textual data with explainable results.

### SUMMARY

Particular embodiments are set out in the independent claims. Various optional examples are set out in the dependent claims. As will be described in greater detail below, the present disclosure describes various systems and methods for text classification. In one example, a computer-implemented method for text classification may include (i) prompting, by a computing device, a large language model (LLM) to extract a set of explanatory statements for a training dataset, wherein each explanatory statement may describe a difference between a grouping of samples within the training dataset, (ii) prompting, by the computing device, the LLM to generate a set of queries based on the set of explanatory statements, wherein each query may evaluate the difference described by an explanatory statement, (iii) training, by the computing device, a machine-learning (ML) model using the set of queries as features, (iv) classifying, by the computing device using the ML model, an unknown sample as a security threat, and (v) performing, by the computing device, a security action to mitigate the security threat.

In some embodiments, the training dataset may include multiple groupings of samples, wherein each sample in a single grouping of samples may be labeled a different classification. In these embodiments, prompting the LLM to extract the set of explanatory statements may include prompting the LLM to extract the explanatory statement for the single grouping of samples and prompting the LLM to extract another explanatory statement for one or more other groupings of samples. In these embodiments, the explanatory statement for the single grouping of samples may provide an explanation for different classifications of each sample in the single grouping of samples.

In some examples, training the ML model may include transforming each sample of the training dataset into a vector using the set of queries, transforming each sample of a testing dataset into the vector using the set of queries, training the ML model with the transformed training dataset, evaluating an accuracy of the ML model using the transformed testing dataset, and/or applying an optimization technique to the ML model. In these examples, applying the optimization technique to the ML model may include weighting the training dataset, training the ML model with a portion of the training dataset, pruning the ML model, modifying a first prompt used to extract the set of explanatory statements, modifying a second prompt used to generate the set of queries, and/or performing a different machine-learning technique to train the ML model.

In one embodiment, performing the security action may include alerting an administrator of the security threat, quarantining the unknown sample, performing an additional analysis of the unknown sample, blocking the unknown sample, and/or identifying an attribute used to classify the unknown sample as the security threat.

In one example, the computer-implemented method may further include prompting the LLM to generate a security report for the security threat, wherein the security report may include an applicable set of explanatory statements based on the classification of the unknown sample using the ML model.

In one embodiment, a system for text classification may include at least one physical processor and physical memory that includes computer-executable instructions that, when executed by the physical processor, cause the physical processor to execute an extraction module, a generation module, a training module, a classification module, and a security module. In this embodiment, the system may include (i) the extraction module, stored in memory, that prompts, by a computing device, an LLM to extract a set of explanatory statements for a training dataset, wherein each explanatory statement may describe a difference between a grouping of samples within the training dataset, (ii) the generation module, stored in memory, that prompts, by the computing device, the LLM to generate a set of queries based on the set of explanatory statements, wherein each query may evaluate the difference described by an explanatory statement, (iii) the training module, stored in memory, that trains, by the computing device, an ML model using the set of queries as features, (iv) the classification module, stored in memory, that classifies, by the computing device using the ML model, an unknown sample as a security threat, and (v) the security module, stored in memory, that performs, by the computing device, a security action to mitigate the security threat.

In some examples, the above-described method may be encoded as computer-readable instructions on a non-transitory computer-readable medium. For example, a computer-readable medium may include one or more computer-executable instructions that, when executed by at least one processor of a computing device, may cause the computing device to (i) prompt, by the computing device, an LLM to extract a set of explanatory statements for a training dataset, wherein each explanatory statement may describe a difference between a grouping of samples within the training dataset, (ii) prompt, by the computing device, the LLM to generate a set of queries based on the set of explanatory statements, wherein each query may evaluate the difference described by an explanatory statement, (iii) train, by the computing device, an ML model using the set of queries as features, (iv) classify, by the computing device using the ML model, an unknown sample as a security threat, and (v) perform, by the computing device, a security action to mitigate the security threat.

Features from any of the embodiments described herein may be used in combination with one another in accordance with the general principles described herein. These and other embodiments, features, and advantages will be more fully understood upon reading the following detailed description in conjunction with the accompanying drawings and claims.

### BRIEF DESCRIPTION OF THE DRAWINGS

The accompanying drawings illustrate a number of example embodiments and are a part of the specification. Together with the following description, these drawings demonstrate and explain various principles of the present disclosure.
FIG. 1 is a block diagram of an example system for text classification.
FIG. 2 is a block diagram of an additional example system for text classification.
FIG. 3 is a flow diagram of an example method for text classification.
FIG. 4 is a block diagram of an example training dataset transformed into example features.
FIG. 5 is a block diagram of an example process of training and optimizing an example machine-learning (ML) model.
FIG. 6 is a block diagram of an example decision tree structure of an example ML model.
FIG. 7 is a block diagram of an example report with example explanatory statements.
FIG. 8 is a block diagram of an example computing system capable of implementing one or more of the embodiments described and/or illustrated herein.
FIG. 9 is a block diagram of an example computing network capable of implementing one or more of the embodiments described and/or illustrated herein.

Throughout the drawings, identical reference characters and descriptions indicate similar, but not necessarily identical, elements. While the example embodiments described herein are susceptible to various modifications and alternative forms, specific embodiments have been shown by way of example in the drawings and will be described in detail herein. However, the example embodiments described herein are not intended to be limited to the particular forms disclosed. Rather, the present disclosure covers all modifications, equivalents, and alternatives falling within the scope of the appended claims.

### DETAILED DESCRIPTION OF EXAMPLE EMBODIMENTS

The present disclosure is generally directed to systems and methods for text classification. As will be explained in greater detail below, by combining large language models (LLMs) with other machine learning (ML) techniques, the systems and methods described herein may harness the power of LLMs while reducing the impact of potential hallucinations and unexplained errors. Specifically, the disclosed systems and methods may first prompt an LLM to identify differences in sets of sample data. For example, an LLM may detect at least one difference between a spam email and a paired benign email and may subsequently describe the difference in a sentence. By prompting for a description of the difference, the disclosed systems and methods may create a set of statements for the whole training dataset, with each statement explaining a difference between a specific pairing or grouping. Additionally, the systems and methods described herein may prompt the LLM to transform the explanatory statements into queries. For example, the LLM may be prompted to convert an explanatory statement into a question asking whether the previously identified difference distinguishing a spam email from a benign email exists in a text message. By training a machine-learning (ML) model using the queries as features, the disclosed systems and methods may then combine the ability of LLMs to extract features with the control of other types of prediction models. Furthermore, by using the trained ML model to classify new data, the disclosed systems and methods may apply other techniques to optimize and improve the ML model for more accurate classification.

In addition, the systems and methods described herein may improve the functioning of a computing device by automatically classifying potentially harmful messages or other text content, which may be an exorbitantly costly process to manually perform, and using the classification to prevent malware or scams. For example, the disclosed systems and methods may automate prompting LLMs using training data to extract features that may then be used to train ML models to automate scam detection. These systems and methods may also improve the fields of text processing and/or network security by overcoming and/or reducing the impact of hallucinations using LLMs while improving the accuracy of text classification and detection of anomalies. For example, by restricting the use of LLMs to feature extraction to be used with other ML methods, the disclosed systems and methods may provide higher reliability and controllability while retaining the precision of LLMs. Additionally, by using explanatory statements to generate human-readable outputs, the disclosed systems and methods may provide a reasoning for classification that gives insight into differences between classes and enables users to understand and accept the results, which further improves ease of use and trust in the model. Thus, the disclosed systems and methods may improve the classification of text to mitigate malicious threats.

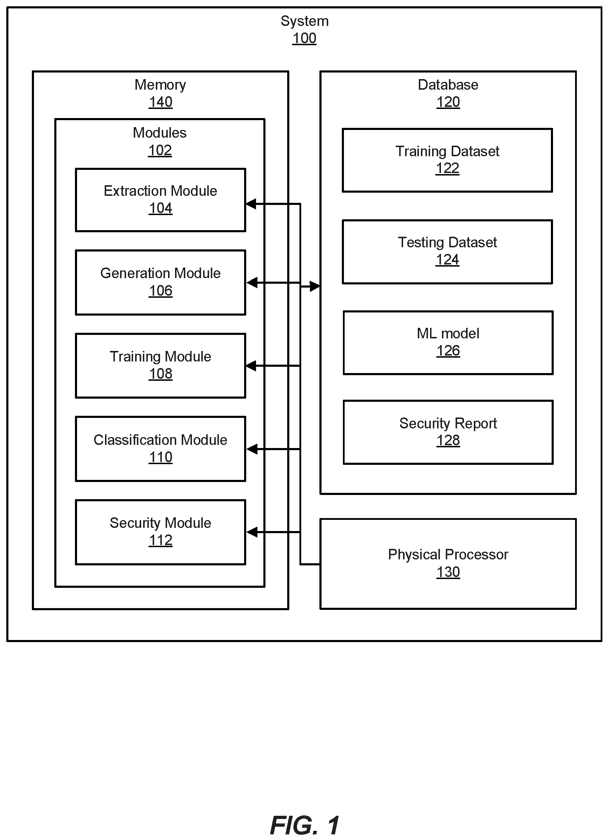

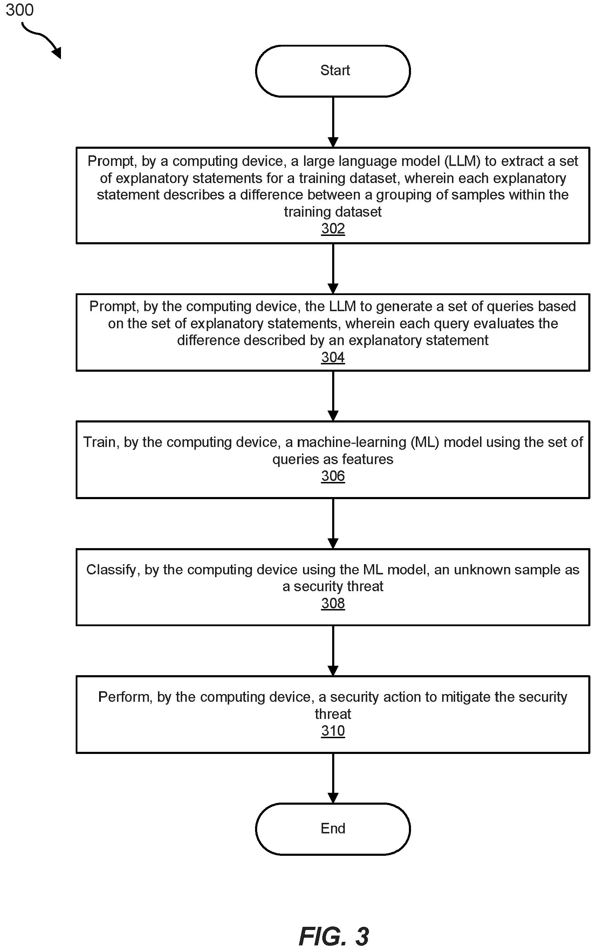

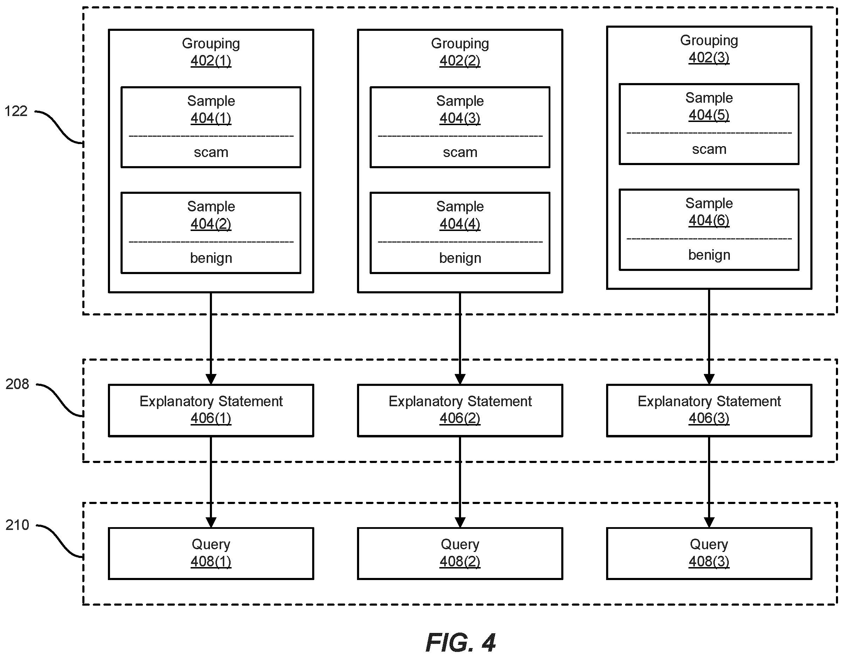

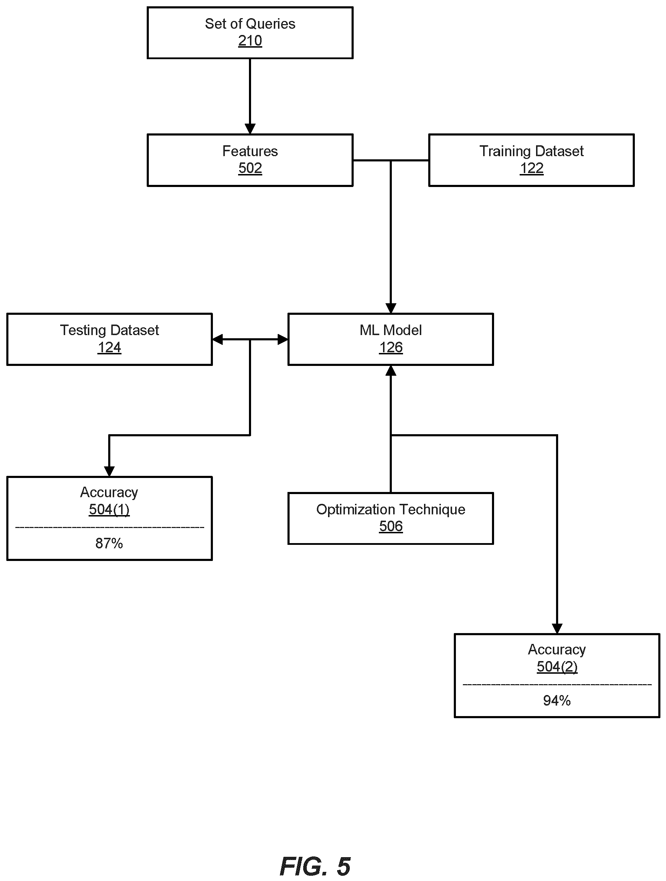

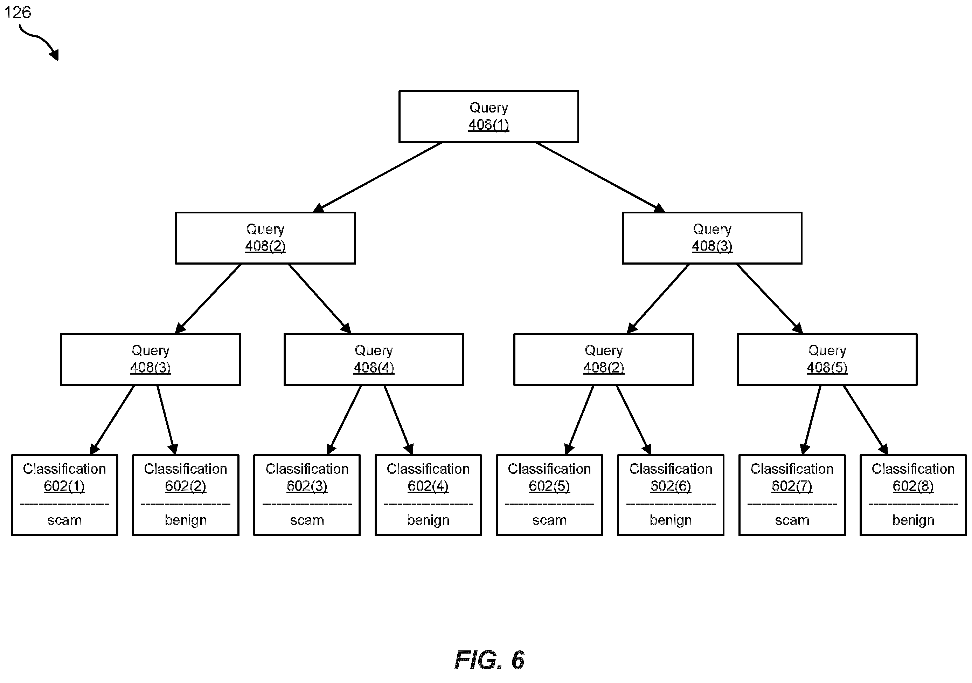

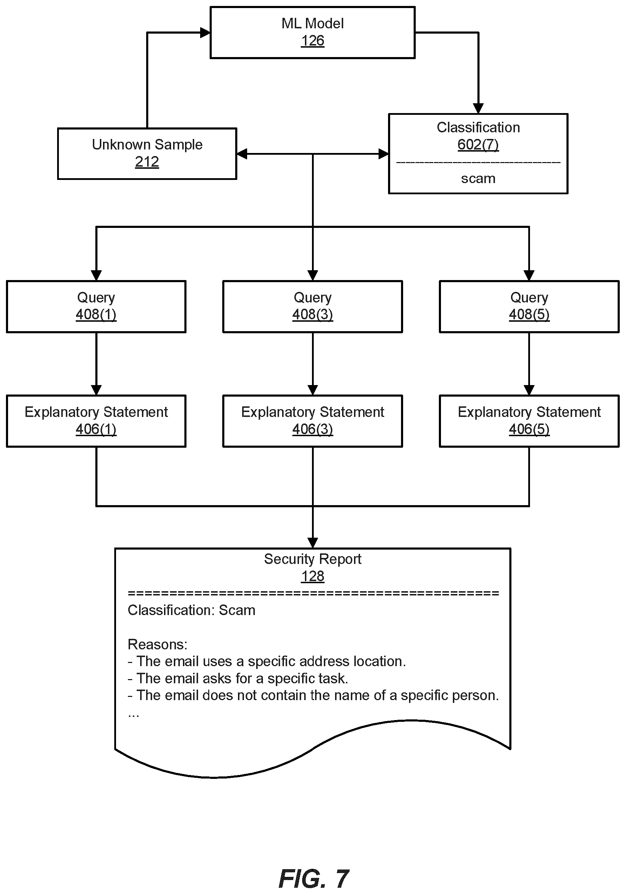

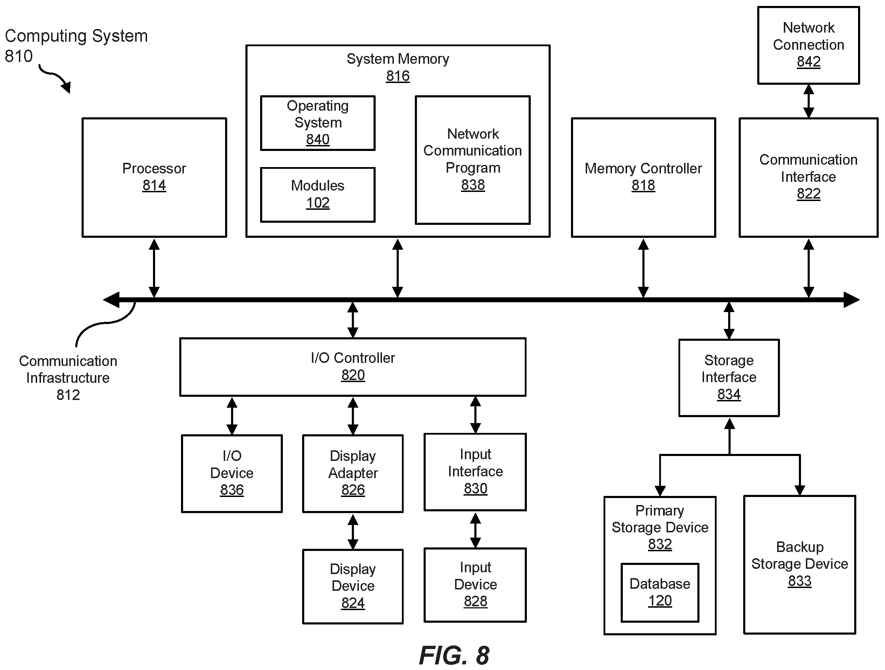

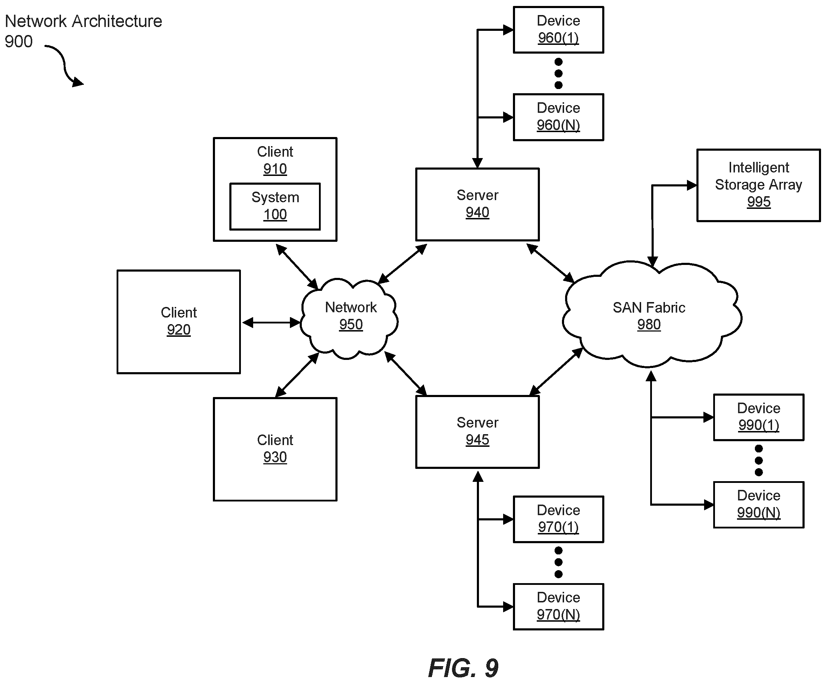

The following will provide, with reference to FIGS. 1-2, detailed descriptions of example systems for text classification. Detailed descriptions of corresponding computer-implemented methods will also be provided in connection with FIG. 3. In addition, detailed descriptions of an example training dataset transformed into example features will be provided in connection with FIG. 4. Detailed descriptions of an example process of training and optimizing an example ML model will also be provided in connection with FIG. 5. Additionally, detailed descriptions of an example decision tree structure of an example ML model will be provided in connection with FIG. 6. Furthermore, detailed descriptions of an example report with example explanatory statements will be provided in connection with FIG. 7. Finally, detailed descriptions of an example computing system and network architecture capable of implementing one or more of the embodiments described herein will be provided in connection with FIGS. 8 and 9, respectively.

FIG. 1 is a block diagram of an example system 100 for text classification. As illustrated in this figure, example system 100 may include one or more modules 102 for performing one or more tasks. As will be explained in greater detail below, modules 102 may include an extraction module 104, a generation module 106, a training module 108, a classification module 110, and a security module 112. Although illustrated as separate elements, one or more of modules 102 in FIG. 1 may represent portions of a single module or application or multiple modules or applications.

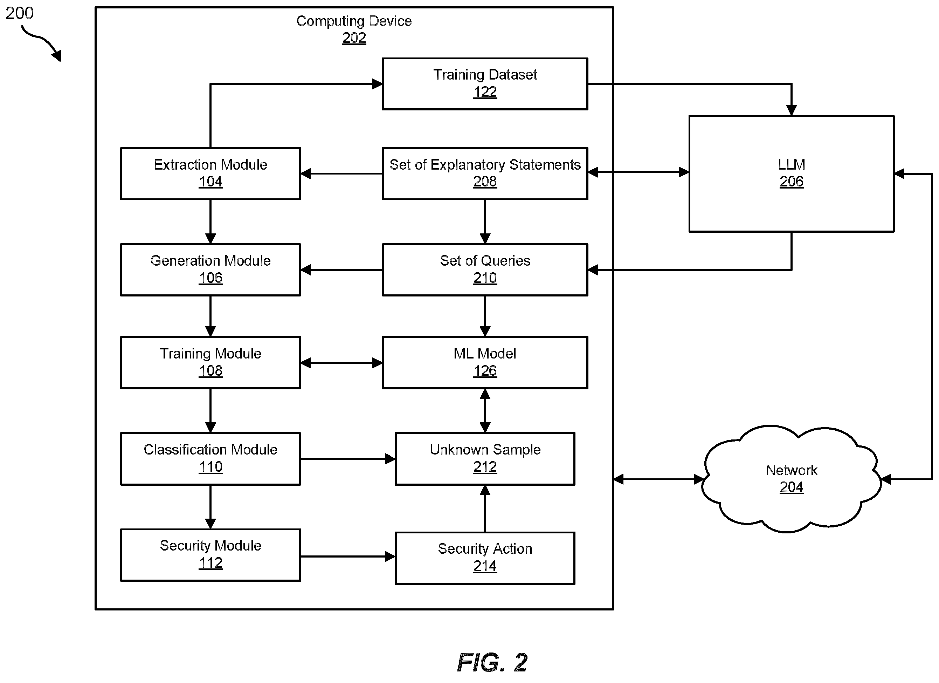

In certain embodiments, one or more of modules 102 in FIG. 1 may represent one or more software applications or programs that, when executed by a computing device, may cause the computing device to perform one or more tasks. For example, and as will be described in greater detail below, one or more of modules 102 may represent modules stored and configured to run on one or more computing devices, such as the devices illustrated in FIG. 2 (e.g., computing device 202). One or more of modules 102 in FIG. 1 may also represent all or portions of one or more special-purpose computers configured to perform one or more tasks.

As illustrated in FIG. 1, example system 100 may also include one or more memory devices, such as memory 140. Memory 140 generally represents any type or form of volatile or non-volatile storage device or medium capable of storing data and/or computer-readable instructions. In one example, memory 140 may store, load, and/or maintain one or more of modules 102. Examples of memory 140 include, without limitation, Random Access Memory (RAM), Read Only Memory (ROM), flash memory, Hard Disk Drives (HDDs), Solid-State Drives (SSDs), optical disk drives, caches, variations or combinations of one or more of the same, and/or any other suitable storage memory.

As illustrated in FIG. 1, example system 100 may also include one or more physical processors, such as physical processor 130. Physical processor 130 generally represents any type or form of hardware-implemented processing unit capable of interpreting and/or executing computer-readable instructions. In one example, physical processor 130 may access and/or modify one or more of modules 102 stored in memory 140. Additionally or alternatively, physical processor 130 may execute one or more of modules 102 to facilitate text classification. Examples of physical processor 130 include, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, and/or any other suitable physical processor.

As illustrated in FIG. 1, example system 100 may also include one or more databases, such as database 120. In one example, database 120 may be configured to store a training dataset 122, a testing dataset 124, an ML model 126, and/or a security report 128. Database 120 may represent portions of a single database or computing device or a plurality of databases or computing devices. For example, database 120 may represent a portion of computing device 202 in FIG. 2. Alternatively, database 120 in FIG. 1 may represent one or more physically separate devices capable of being accessed by a computing device, such as computing device 202 in FIG. 2.

Example system 100 in FIG. 1 may be implemented in a variety of ways. For example, all or a portion of example system 100 may represent portions of example system 200 in FIG. 2. As shown in FIG. 2, system 200 may include a computing device 202 in communication with an LLM 206 via a network 204. In one example, all or a portion of the functionality of modules 102 may be performed by computing device 202 and/or any other suitable computing system. As will be described in greater detail below, one or more of modules 102 from FIG. 1 may, when executed by at least one processor of computing device 202, enable computing device 202 to classify text data and/or detect malicious text. For example, and as will be described in greater detail below, extraction module 104 may extract a set of explanatory statements 208 by analyzing training dataset 122 using LLM 206. The term "large language model," as used herein, generally refers to a data mining model for processing or classifying natural language with the ability to generate language content. In some examples, LLMs may be hosted on independent servers and/or on an online platform, such as a generative AI application. The term "generative AI," as used herein, generally refers to artificial intelligence or machine learning techniques used to learn patterns from data and generate new and/or similar data based on the learning.

In the above example, generation module 106 may then extract a set of queries 210 by transforming set of explanatory statements 208 using LLM 206. Training module 108 may then train ML model 126 using set of queries 210 as features. The terms "artificial intelligence" and "machine learning," as used herein, generally refer to methods or algorithms for modeling human intelligence with computing systems to learn from data in order to make predictions. Classification module 110 may then classify an unknown sample 212 using trained ML model 126. Finally, security module 112 may perform a security action 214 to mitigate a security threat detected based on the classification of unknown sample 212.

In the example of FIG. 2, and as will be explained in greater detail below, computing device 202 may first collect or generate training dataset 122. In this example, computing device 202 may then interact with LLM 206 via network 204 to extract features from training dataset 122. In this example, computing device 202 may train ML model 126 based on the interaction with LLM 206 and may use ML model 126 to automatically classify future text content. Additionally, computing device 202 may perform security action 214 based on detecting a security threat from unknown sample 212. For example, computing device 202 may block unknown sample 212 from being displayed if unknown sample 212 is classified as spam email. The term "spam," as used herein, generally refers to an unsolicited message that may be irrelevant to a recipient and/or may contain malicious content or scams.

Computing device 202 generally represents any type or form of computing device capable of reading computer-executable instructions. For example, computing device 202 may represent an administrative device that monitors incoming content for endpoint devices. As another example, computing device 202 may represent an endpoint device that analyzes existing data on computing device 202. Additional examples of computing device 202 include, without limitation, laptops, tablets, desktops, servers, cellular phones, Personal Digital Assistants (PDAs), multimedia players, embedded systems, wearable devices (e.g., smart watches, smart glasses, etc.), smart vehicles, smart packaging (e.g., active or intelligent packaging), gaming consoles, so-called Internet-of-Things devices (e.g., smart appliances, etc.), variations or combinations of one or more of the same, and/or any other suitable computing device.

In some examples, LLM 206 may be hosted on a server or an online platform and may accumulate data from online sources. Such a platform may include a single server and/or a plurality of computing devices and/or servers that work and/or operate in conjunction with one another. Additional examples of servers and/or platforms include, without limitation, security servers, application servers, web servers, storage servers, and/or database servers configured to run certain software applications and/or provide various security, web, storage, and/or database services. In other examples, LLM 206 may be stored on computing device 202 and/or on a local device.

Network 204 generally represents any medium or architecture capable of facilitating communication or data transfer. In one example, network 204 may facilitate communication between computing device 202 and LLM 206 and/or a platform or server hosting LLM 206. In this example, network 204 may facilitate communication or data transfer using wireless and/or wired connections. Examples of network 204 include, without limitation, an intranet, a Wide Area Network (WAN), a Local Area Network (LAN), a Personal Area Network (PAN), the Internet, Power Line Communications (PLC), a cellular network (e.g., a Global System for Mobile Communications (GSM) network), portions of one or more of the same, variations or combinations of one or more of the same, and/or any other suitable network.

FIG. 3 is a flow diagram of an example computer-implemented method 300 for text classification. The steps shown in FIG. 3 may be performed by any suitable computer-executable code and/or computing system, including system 100 in FIG. 1, system 200 in FIG. 2, and/or variations or combinations of one or more of the same. In one example, each of the steps shown in FIG. 3 may represent an algorithm whose structure includes and/or is represented by multiple sub-steps, examples of which will be provided in greater detail below.

As illustrated in FIG. 3, at step 302 one or more of the systems described herein may prompt, by a computing device, an LLM to extract a set of explanatory statements for a training dataset, wherein each explanatory statement describes a difference between a grouping of samples within the training dataset. For example, extraction module 104 may, as part of computing device 202 in FIG. 2, prompt LLM 206 to extract set of explanatory statements 208 for training dataset 122, wherein each explanatory statement describes a difference between a grouping of samples within training dataset 122.

The systems described herein may perform step 302 in a variety of ways. In one example, training dataset 122 may include multiple groupings of samples, wherein each sample in a single grouping of samples is labeled a different classification. In some examples, computing device 202 may first generate training dataset 122 with intentionally different classifications for each sample in a grouping. In other examples, computing device 202 may collect samples and group them into groupings based on classification labels. Additionally or alternatively, computing device 202 may receive training dataset 122 with prelabeled classifications. For example, training dataset 122 may include pairs of text samples, with each pair including a sample of benign text and a sample of malicious text.

In some embodiments, extraction module 104 may prompt LLM 206 to extract set of explanatory statements 208 by prompting LLM 206 to extract an explanatory statement for each grouping of samples. In these embodiments, the explanatory statement for a single grouping of samples may provide an explanation for different classifications of each sample in the single grouping of samples. In these embodiments, extraction module 104 may use a single prompt for all groupings to extract the explanatory statement for each grouping. In the above example, a single prompt may ask LLM 206 to generate an explanatory statement describing a difference between the sample of benign text and the sample of malicious text in each pair. In other embodiments, extraction module 104 may use a different prompt for each grouping of samples, such as by tailoring the prompt to the classifications or content of each grouping.

As illustrated in the example of FIG. 4, training dataset 122 may include groupings 402(1)-(3) of sample data. In this example, each of groupings 402(1)-(3) may include a scam sample (i.e., samples 404(1), 404(3), and 404(5)) and a benign sample (i.e., samples 404(2), 404(4), and 404(6)). Using LLM 206, extraction module 104 may then extract set of explanatory statements 208, with each of explanatory statements 406(1)-(3) corresponding to groupings 402(1)-(3). Although illustrated as extracting a single explanatory statement for each grouping, in some examples, extraction module 104 may extract multiple explanatory statements for each grouping of samples. For example, extraction module 104 may extract multiple explanatory statements that describe a malicious text sample as being directed to a specific person, as using an urgent tone, and as having typographical errors when compared to a benign text sample. In other examples, explanatory statements may include nonbinary features, such as an interval, a range, or a classification of a specific feature.

Returning to FIG. 3, at step 304 one or more of the systems described herein may prompt, by the computing device, the LLM to generate a set of queries based on the set of explanatory statements, wherein each query evaluates the difference described by an explanatory statement. For example, generation module 106 may, as part of computing device 202 in FIG. 2, prompt LLM 206 to generate set of queries 210 based on set of explanatory statements 208, wherein each query evaluates the difference described by an explanatory statement.

The systems described herein may perform step 304 in a variety of ways. In some examples, generation module 106 may use a single prompt to ask LLM 206 to generate a query for each explanatory statement. In other examples, generation module 106 may use a different prompt for each explanatory statement, such as by tailoring the prompt to a type of statement. In these examples, extraction module 104 and generation module 106 may use LLM 206 to restrict a search space for classifying differences in text data. In other words, computing device 202 may restrict the use of LLM 206 to an extraction of discriminatory information that differentiates sample classes of text, effectively cleaning training dataset 122. In these examples, extraction module 104 may use a first prompt to describe a goal for classification, and generation module 106 may use a second prompt to convert descriptive statements into queries that may then be used for classification.

In the example of FIG. 4, generation module 106 may prompt LLM 206 to transform each of explanatory statements 406(1)-(3) into queries 408(1)-(3), respectively. In the above example, explanatory statements describing a message as being directed to a specific person, as using an urgent tone, and as having typographical errors may be transformed into queries asking if a message is directed to a specific person, if the message uses an urgent tone, and if the message has typographical errors. Similarly, set of queries 210 may include questions that do not result in binary "yes" or "no" answers.

In some examples, LLM 206 may represent two or more different LLMs with different computation power. In these examples, LLMs with more power may be able to detect subtler differences between text samples and provide more precise and more readable results, but these larger LLMs may also be more expensive to run. For example, LLM 206 may include a more powerful LLM for extracting set of explanatory statements 208 from training dataset 122, which may be a more time-consuming process. In this example, a different LLM with faster computation may be used for generating set of queries 210, which may require less computational power for a simpler process.

Returning to FIG. 3, at step 306 one or more of the systems described herein may train, by the computing device, an ML model using the set of queries as features. For example, training module 108 may, as part of computing device 202 in FIG. 2, train ML model 126 using set of queries 210 as features.

The systems described herein may perform step 306 in a variety of ways. In one embodiment, training module 108 may train ML model 126 by transforming each sample of training dataset 122 into a vector using set of queries 210, transforming each sample of testing dataset 124 into a vector using set of queries 210, training ML model 126 with the transformed training dataset, evaluating an accuracy of ML model 126 using the transformed testing dataset, and/or applying an optimization technique to ML model 126. As used herein, the term "vector" may generally refer to a data construct that includes multiple elements of information, such as a tuple, an array, a matrix, and/or any other suitable combination of data. For example, samples of training dataset 122 may include a binary matrix representing set of queries 210 that may be fitted to ML model 126. In this embodiment, training module 108 may apply all feature extraction prompts to each data sample in training dataset 122 and testing dataset 124 to create a vector for each sample.

In some examples, training module 108 may train ML model 126 to determine which features are useful for distinguishing between classifications of text, such as between scam messages and legitimate messages. The term "feature," as used herein, generally refers to a value or vector derived from data that enables it to be measured and/or interpreted as part of a machine learning method. Examples of features may include numerical data that quantizes a factor, textual data used in pattern recognition, graphical data, or any other format of data that may be analyzed using statistical methods or machine learning. Examples of ML models may include, without limitation, support vector machines, neural networks, clustering models, decision trees, classifiers, variations or combinations of one or more of the same, and/or any other suitable model. Specifically, ML model 126 may differ from LLM 206 or other generative AI techniques by using machine learning methods that are not prone to hallucinations. The term "hallucination," as used herein, generally refers to false information or incorrectly generated data that appears real and may have a high confidence. In other words, LLM hallucinations may be difficult to distinguish from accurate or legitimate output. In these examples, ML model 126 may reduce the impact of LLM hallucinations through the optimization technique. For example, pruning a decision tree to fit ML model 126 may reduce a potential for overfitting and may ensure ML model 126 is not fitted to noise caused by hallucinations. In these examples, training module 108 may measure the discriminative power of each feature to determine how well each feature can distinguish between classes and, subsequently, select features to increase the conciseness and informativeness of the classification.

In some embodiments, training module 108 may apply the optimization technique to ML model 126 by weighting training dataset 122, training ML model 126 with a portion of training dataset 122, pruning ML model 126, and/or performing a different machine-learning technique to train ML model 126. For example, training module 108 may weight some features based on the prevalence or uniqueness of those features in training dataset 122, use a select variety of features to train ML model 126 as a decision tree, and then prune the decision tree based on using testing dataset 124 to evaluate the accuracy of ML model 126. In this example, not all groupings of training dataset 122 may be necessary during the training phase, and training module 108 may perform random sub-sampling or weighted sub-sampling to increase a variability in training dataset 122 while reducing a number of samples used for training.

In some embodiments, training module 108 may apply the optimization technique by modifying a first prompt used to extract set of explanatory statements 208 and/or modifying a second prompt used to generate set of queries 210. In these embodiments, training module 108 may optimize one or both prompts to LLM 206 to improve an assessment of samples from training dataset 122 and/or feature extraction. For example, a narrower prompt or query may reduce a possibility of misinterpretation by LLM 206, and an administrator may review the first prompt and the second prompt to improve the outputs from LLM 206. In these embodiments, different prompts used as input to LLM 206 may result in different outputs that extract different features. Additionally or alternatively, training module 108 may perform other optimizations to combine techniques such as boosting a decision tree, using random forests, and/or any other suitable method of improving prediction accuracy, reducing complexity, and/or increasing robustness.

As illustrated in FIG. 5, set of queries 210 may be used as features 502, which may be used in conjunction with training dataset 122 to train ML model 126. In this example, training module 108 may then use testing dataset 124 to evaluate ML model 126 and to calculate an accuracy 504(1). Based on accuracy 504(1), training module 108 may then determine an optimization technique 506 to apply to ML model 126. In this example, training module 108 may calculate an improved accuracy 504(2) due to optimization technique 506.

In the example of FIG. 6, ML model 126 may represent a decision tree structure with each node representing a query of set of queries 210. In this example, the decision tree may evaluate every text sample against the extracted features, or queries 408(1)-(5), wherein each node evaluates one feature from features 502 such that the query determines which path to follow next. For example, after the training vectors have been fitted to ML model 126, training module 108 may evaluate ML model 126 by following a path through the nodes of the decision tree for a sample from testing dataset 124, asking each query along the path until reaching an end node or leaf that indicates a classification, such as classifications 602(1)-(8). Additionally, as illustrated in FIG. 6, a query, such as query 408(2), may be represented in multiple nodes, such as nodes belonging to different paths. Although illustrated as binary choices, each node may represent a choice between multiple paths, such as choices with value intervals. For example, a node may evaluate a complexity of a message, differentiated as multiple levels of complexity.

In some examples, training module 108 may evaluate the accuracy of ML model 126 using testing dataset 124 by analyzing each sample using LLM 206. For example, at the first node of the decision tree of FIG. 6, ML model 126 may prompt LLM 206 with query 408(1) and the sample data to determine which path to follow, to either query 408(2) or query 408(3) for additional analysis. Additionally, training module 108 may train ML model 126 with a similar process of prompting LLM 206 with samples from training dataset 122. In other examples, training module 108 may train ML model 126 to cluster text for exploratory purposes, rather than classifying each sample of text. In these examples, LLM 206 may be used as a knowledge exploration tool without initially confirming the differences between classifications.

Returning to FIG. 3, at step 308 one or more of the systems described herein may classify, by the computing device using the ML model, an unknown sample as a security threat. For example, classification module 110 may, as part of computing device 202 in FIG. 2, classify, using ML model 126, unknown sample 212 as a security threat.

The systems described herein may perform step 308 in a variety of ways. In some embodiments, classification module 110 may directly input unknown sample 212 into ML model 126 to obtain a classification. For example, a decision tree may pass unknown sample 212 from node to node, with each node evaluating unknown sample 212 using a query, until reaching a leaf node that determines a final classification. Similar to the above training examples, classification module 110 may analyze unknown sample 212 by prompting LLM 206 with each query to determine which path to follow. In the example of FIG. 6, unknown sample 212 may follow a path from query 408(1) to query 408(3) to query 408(5) to arrive at classification 602(7) that unknown sample 212 is a scam and, therefore, a security threat. Additionally or alternatively, classification module 110 may perform additional functions to preprocess unknown sample 212 and/or to transform unknown sample 212 into an appropriate format for classifying using ML model 126.

Returning to FIG. 3, at step 310 one or more of the systems described herein may perform, by the computing device, a security action to mitigate the security threat. For example, security module 112 may, as part of computing device 202 in FIG. 2, perform security action 214 to mitigate the security threat.

The systems described herein may perform step 310 in a variety of ways. In some examples, security module 112 may alert an administrator of the security threat, quarantine unknown sample 212, perform an additional analysis of unknown sample 212, block unknown sample, and/or identify one or more attributes used to classify unknown sample 212 as the security threat. For example, as part of an email service, security module 112 may quarantine an email, based on classification 602(7) determining that unknown sample 212 contains a scam. As another example, security module 112 may determine that an attribute, such as an origin domain name, of unknown sample 212 is a known security threat. In this example, security module 112 may automatically block all content from any sender with the domain name. In other examples, security module 112 may analyze multiple potential text samples to identify common attributes that may indicate security threats. For example, security module 112 may alert an administrator if multiple text documents are classified as security threats and also contain a common website link. In this example, the administrator may evaluate the link to determine it contains malware, and security module 112 may update ML model 126 to classify documents containing the link as security threats. In the above examples, security module 112 may use the classification of unknown sample 212 and/or other text samples to update training dataset 122 and/or testing dataset 124 to retrain ML model 126. In these examples, computing device 202 may iteratively improve ML model 126 with new data and/or with confirmed classifications, such as through administrator review.

In some embodiments, the disclosed systems and methods may further prompt LLM 206 to generate security report 128 for the security threat, wherein security report 128 may include an applicable set of explanatory statements based on the classification of unknown sample 212 using ML model 126. In these embodiments, security module 112 may review the queries used to evaluate unknown sample 212 and find the corresponding explanatory statements to include in security report 128. In these embodiments, security module 112 may directly use the features of ML model 126 to obtain the applicable queries from set of queries 210, which may be used to obtain the applicable explanatory statements from set of explanatory statements 208.

For example, in the example of FIG. 7, unknown sample 212 may be classified by ML model 126 as classification 602(7), which indicates a scam. In this example, and as shown in FIG. 6, ML model 126 may evaluate unknown sample 212 by asking query 408(1), query 408(3), and query 408(5) to arrive at classification 602(7). In this example, security module 112 may use queries 408(1), 408(3), and 408(5) and the results of those queries to derive explanatory statements 406(1), 406(3), and 406(5), respectively. In some embodiments, security module 112 may utilize LLM 206 to transform the queries back into explanatory statements. For example, LLM 206 may be prompted to summarize the results of the classification process, and security module 112 may include the summarized results in security report 128. In some examples, security report 128 may include more general explanations, such as explanations derived from classification of multiple text samples. In the example of FIG. 7, security report 128 may include classification 602(7) indicating unknown sample 212 is a scam as well as explanatory statements 406(1), 406(3), and 406(5) indicating unknown sample 212 "uses a specific address location," "asks for a specific task," and "does not contain the name of a specific person." In some examples, security report 128 may include additional explanatory statements based on the evaluation of unknown sample 212, evaluations or other text samples, and/or any other suitable information to explain why unknown sample 212 is classified as a scam. By reformulating the evaluation of queries into explanatory statements, security report 128 may be easily readable by a user or an administrator.

Although described as providing classifications for scam detection, the disclosed systems and methods may also classify data in other ways. For example, computing device 202 may generate a taxonomical set of reasons why classes of text differ to help understand differences between legitimate websites and phishing websites. In one example, the disclosed systems and methods may be used for fingerprinting to identify data from a specific source or individual. For example, computing device 202 may detect stylistic differences between two humans and/or between a human and generative AI. In this example, computing device 202 may then generate security report 128 to explain those differences. As another example, computing device 202 may cluster multiple samples of new and unknown text, rather than labeling one sample at a time, and may generate security report 128 to describe unique features of each cluster. In additional examples, the disclosed systems and methods may sort through documents and/or text to classify them based on urgency, complexity, security, and/or any other context-dependent attributes for various classification problems. Because the disclosed systems and methods provide a data-driven solution, these systems and methods may be applied to any problem or model that may be trained with text samples.

As explained above in connection with method 300 in FIG. 3, the disclosed systems and methods may, by using LLMs for feature extraction for other ML models, improve the classification and explanatory power of ML models while decreasing the impact of unpredictable hallucination errors of LLMs. Specifically, the disclosed systems and methods may prompt an LLM to find differences in prelabeled sample data to identify features that may be used to classify the data. Because LLMs may produce high-confidence errors that are hard to distinguish from accurate outputs, this may create issues with both decision making and generating justification for decisions using LLMs. Additionally, LLMs may be language agnostic and may enable high performance text analytics through fine-tuning or prompting, which may enable zero-shot or few-shot learning that may be applied to training data. By restricting the use of LLMs to feature extraction before the training phase, the systems and methods described herein may limit the impact of a hallucination to a single feature, which may reduce the impact of hallucinations during the decision-making process and improve control over a final classification. In other words, the ultimate decision may be deterministic and may use multiple features such that the decision is out of the scope of the LLM and is fully transparent, self-explanatory, and controllable using the ML model. For example, by prompting an LLM to create explanatory statements explaining differences and then prompting the LLM to turn the statements into queries to evaluate the differences, the disclosed systems and methods may generate a set of queries that may serve as features for a decision tree or other ML model. The systems and methods described herein may then train the ML model and use the ML model in conjunction with the LLM to execute each query to arrive at classification for unclassified data. Furthermore, by using LLMs to formulate explanatory statements explaining differences between classes, the disclosed systems and methods may then create readable explanations of classifications. For example, by implementing a fully explainable decision-making process with features based on the explanatory statements, the disclosed systems and methods may review the queries used during ML classification to create a report that explains the classification in a human-readable way, thereby helping users and administrators understand why something is a scam and/or providing information to explain how decisions are made by the ML model. Thus, the systems and methods described herein may improve decision making and classification for text-based data.

FIG. 8 is a block diagram of an example computing system 810 capable of implementing one or more of the embodiments described and/or illustrated herein. For example, all or a portion of computing system 810 may perform and/or be a means for performing, either alone or in combination with other elements, one or more of the steps described herein (such as one or more of the steps illustrated in FIG. 3). All or a portion of computing system 810 may also perform and/or be a means for performing any other steps, methods, or processes described and/or illustrated herein.

Computing system 810 broadly represents any single or multi-processor computing device or system capable of executing computer-readable instructions. Examples of computing system 810 include, without limitation, workstations, laptops, client-side terminals, servers, distributed computing systems, handheld devices, or any other computing system or device. In its most basic configuration, computing system 810 may include at least one processor 814 and a system memory 816.

Processor 814 generally represents any type or form of physical processing unit (e.g., a hardware-implemented central processing unit) capable of processing data or interpreting and executing instructions. In certain embodiments, processor 814 may receive instructions from a software application or module. These instructions may cause processor 814 to perform the functions of one or more of the example embodiments described and/or illustrated herein.

System memory 816 generally represents any type or form of volatile or non-volatile storage device or medium capable of storing data and/or other computer-readable instructions. Examples of system memory 816 include, without limitation, Random Access Memory (RAM), Read Only Memory (ROM), flash memory, or any other suitable memory device. Although not required, in certain embodiments computing system 810 may include both a volatile memory unit (such as, for example, system memory 816) and a non-volatile storage device (such as, for example, primary storage device 832, as described in detail below). In one example, one or more of modules 102 from FIG. 1 may be loaded into system memory 816.

In some examples, system memory 816 may store and/or load an operating system 840 for execution by processor 814. In one example, operating system 840 may include and/or represent software that manages computer hardware and software resources and/or provides common services to computer programs and/or applications on computing system 810. Examples of operating system 840 include, without limitation, LINUX, JUNOS, MICROSOFT WINDOWS, WINDOWS MOBILE, MAC OS, APPLE'S IOS, UNIX, GOOGLE CHROME OS, GOOGLE'S ANDROID, SOLARIS, variations of one or more of the same, and/or any other suitable operating system.

In certain embodiments, example computing system 810 may also include one or more components or elements in addition to processor 814 and system memory 816. For example, as illustrated in FIG. 8, computing system 810 may include a memory controller 818, an Input/Output (I/O) controller 820, and a communication interface 822, each of which may be interconnected via a communication infrastructure 812. Communication infrastructure 812 generally represents any type or form of infrastructure capable of facilitating communication between one or more components of a computing device. Examples of communication infrastructure 812 include, without limitation, a communication bus (such as an Industry Standard Architecture (ISA), Peripheral Component Interconnect (PCI), PCI Express (PCIe), or similar bus) and a network.

Memory controller 818 generally represents any type or form of device capable of handling memory or data or controlling communication between one or more components of computing system 810. For example, in certain embodiments memory controller 818 may control communication between processor 814, system memory 816, and I/O controller 820 via communication infrastructure 812.

I/O controller 820 generally represents any type or form of module capable of coordinating and/or controlling the input and output functions of a computing device. For example, in certain embodiments I/O controller 820 may control or facilitate transfer of data between one or more elements of computing system 810, such as processor 814, system memory 816, communication interface 822, display adapter 826, input interface 830, and storage interface 834.

As illustrated in FIG. 8, computing system 810 may also include at least one display device 824 coupled to I/O controller 820 via a display adapter 826. Display device 824 generally represents any type or form of device capable of visually displaying information forwarded by display adapter 826. Similarly, display adapter 826 generally represents any type or form of device configured to forward graphics, text, and other data from communication infrastructure 812 (or from a frame buffer, as known in the art) for display on display device 824.

As illustrated in FIG. 8, example computing system 810 may also include at least one input device 828 coupled to I/O controller 820 via an input interface 830. Input device 828 generally represents any type or form of input device capable of providing input, either computer or human generated, to example computing system 810. Examples of input device 828 include, without limitation, a keyboard, a pointing device, a speech recognition device, variations or combinations of one or more of the same, and/or any other input device.

Additionally or alternatively, example computing system 810 may include additional I/O devices. For example, example computing system 810 may include I/O device 836. In this example, I/O device 836 may include and/or represent a user interface that facilitates human interaction with computing system 810. Examples of I/O device 836 include, without limitation, a computer mouse, a keyboard, a monitor, a printer, a modem, a camera, a scanner, a microphone, a touchscreen device, variations or combinations of one or more of the same, and/or any other I/O device.

Communication interface 822 broadly represents any type or form of communication device or adapter capable of facilitating communication between example computing system 810 and one or more additional devices. For example, in certain embodiments communication interface 822 may facilitate communication between computing system 810 and a private or public network including additional computing systems. Examples of communication interface 822 include, without limitation, a wired network interface (such as a network interface card), a wireless network interface (such as a wireless network interface card), a modem, and any other suitable interface. In at least one embodiment, communication interface 822 may provide a direct connection to a remote server via a direct link to a network, such as the Internet. Communication interface 822 may also indirectly provide such a connection through, for example, a local area network (such as an Ethernet network), a personal area network, a telephone or cable network, a cellular telephone connection, a satellite data connection, or any other suitable connection.

In certain embodiments, communication interface 822 may also represent a host adapter configured to facilitate communication between computing system 810 and one or more additional network or storage devices via an external bus or communications channel. Examples of host adapters include, without limitation, Small Computer System Interface (SCSI) host adapters, Universal Serial Bus (USB) host adapters, Institute of Electrical and Electronics Engineers (IEEE) 1394 host adapters, Advanced Technology Attachment (ATA), Parallel ATA (PATA), Serial ATA (SATA), and External SATA (eSATA) host adapters, Fibre Channel interface adapters, Ethernet adapters, or the like. Communication interface 822 may also allow computing system 810 to engage in distributed or remote computing. For example, communication interface 822 may receive instructions from a remote device or send instructions to a remote device for execution.

In some examples, system memory 816 may store and/or load a network communication program 838 for execution by processor 814. In one example, network communication program 838 may include and/or represent software that enables computing system 810 to establish a network connection 842 with another computing system (not illustrated in FIG. 8) and/or communicate with the other computing system by way of communication interface 822. In this example, network communication program 838 may direct the flow of outgoing traffic that is sent to the other computing system via network connection 842. Additionally or alternatively, network communication program 838 may direct the processing of incoming traffic that is received from the other computing system via network connection 842 in connection with processor 814.

Although not illustrated in this way in FIG. 8, network communication program 838 may alternatively be stored and/or loaded in communication interface 822. For example, network communication program 838 may include and/or represent at least a portion of software and/or firmware that is executed by a processor and/or Application Specific Integrated Circuit (ASIC) incorporated in communication interface 822.

As illustrated in FIG. 8, example computing system 810 may also include a primary storage device 832 and a backup storage device 833 coupled to communication infrastructure 812 via a storage interface 834. Storage devices 832 and 833 generally represent any type or form of storage device or medium capable of storing data and/or other computer-readable instructions. For example, storage devices 832 and 833 may be a magnetic disk drive (e.g., a so-called hard drive), a solid state drive, a floppy disk drive, a magnetic tape drive, an optical disk drive, a flash drive, or the like. Storage interface 834 generally represents any type or form of interface or device for transferring data between storage devices 832 and 833 and other components of computing system 810. In one example, database 120 from FIG. 1 may be stored and/or loaded in primary storage device 832.

In certain embodiments, storage devices 832 and 833 may be configured to read from and/or write to a removable storage unit configured to store computer software, data, or other computer-readable information. Examples of suitable removable storage units include, without limitation, a floppy disk, a magnetic tape, an optical disk, a flash memory device, or the like. Storage devices 832 and 833 may also include other similar structures or devices for allowing computer software, data, or other computer-readable instructions to be loaded into computing system 810. For example, storage devices 832 and 833 may be configured to read and write software, data, or other computer-readable information. Storage devices 832 and 833 may also be a part of computing system 810 or may be a separate device accessed through other interface systems.

Many other devices or subsystems may be connected to computing system 810. Conversely, all of the components and devices illustrated in FIG. 8 need not be present to practice the embodiments described and/or illustrated herein. The devices and subsystems referenced above may also be interconnected in different ways from that shown in FIG. 8. Computing system 810 may also employ any number of software, firmware, and/or hardware configurations. For example, one or more of the example embodiments disclosed herein may be encoded as a computer program (also referred to as computer software, software applications, computer-readable instructions, or computer control logic) on a computer-readable medium. The term "computer-readable medium," as used herein, generally refers to any form of device, carrier, or medium capable of storing or carrying computer-readable instructions. Examples of computer-readable media include, without limitation, transmission-type media, such as carrier waves, and non-transitory-type media, such as magnetic-storage media (e.g., hard disk drives, tape drives, and floppy disks), optical-storage media (e.g., Compact Disks (CDs), Digital Video Disks (DVDs), and BLU-RAY disks), electronic-storage media (e.g., solid-state drives and flash media), and other distribution systems.

The computer-readable medium containing the computer program may be loaded into computing system 810. All or a portion of the computer program stored on the computer-readable medium may then be stored in system memory 816 and/or various portions of storage devices 832 and 833. When executed by processor 814, a computer program loaded into computing system 810 may cause processor 814 to perform and/or be a means for performing the functions of one or more of the example embodiments described and/or illustrated herein. Additionally or alternatively, one or more of the example embodiments described and/or illustrated herein may be implemented in firmware and/or hardware. For example, computing system 810 may be configured as an Application Specific Integrated Circuit (ASIC) adapted to implement one or more of the example embodiments disclosed herein.

FIG. 9 is a block diagram of an example network architecture 900 in which client systems 910, 920, and 930 and servers 940 and 945 may be coupled to a network 950. As detailed above, all or a portion of network architecture 900 may perform and/or be a means for performing, either alone or in combination with other elements, one or more of the steps disclosed herein (such as one or more of the steps illustrated in FIG. 3). All or a portion of network architecture 900 may also be used to perform and/or be a means for performing other steps and features set forth in the present disclosure.

Client systems 910, 920, and 930 generally represent any type or form of computing device or system, such as example computing system 810 in FIG. 8. Similarly, servers 940 and 945 generally represent computing devices or systems, such as application servers or database servers, configured to provide various database services and/or run certain software applications. Network 950 generally represents any telecommunication or computer network including, for example, an intranet, a WAN, a LAN, a PAN, or the Internet. In one example, client systems 910, 920, and/or 930 and/or servers 940 and/or 945 may include all or a portion of system 100 from FIG. 1.

As illustrated in FIG. 9, one or more storage devices 960(1)-(N) may be directly attached to server 940. Similarly, one or more storage devices 970(1)-(N) may be directly attached to server 945. Storage devices 960(1)-(N) and storage devices 970(1)-(N) generally represent any type or form of storage device or medium capable of storing data and/or other computer-readable instructions. In certain embodiments, storage devices 960(1)-(N) and storage devices 970(1)-(N) may represent Network-Attached Storage (NAS) devices configured to communicate with servers 940 and 945 using various protocols, such as Network File System (NFS), Server Message Block (SMB), or Common Internet File System (CIFS).

Servers 940 and 945 may also be connected to a Storage Area Network (SAN) fabric 980. SAN fabric 980 generally represents any type or form of computer network or architecture capable of facilitating communication between a plurality of storage devices. SAN fabric 980 may facilitate communication between servers 940 and 945 and a plurality of storage devices 990(1)-(N) and/or an intelligent storage array 995. SAN fabric 980 may also facilitate, via network 950 and servers 940 and 945, communication between client systems 910, 920, and 930 and storage devices 990(1)-(N) and/or intelligent storage array 995 in such a manner that devices 990(1)-(N) and array 995 appear as locally attached devices to client systems 910, 920, and 930. As with storage devices 960(1)-(N) and storage devices 970(1)-(N), storage devices 990(1)-(N) and intelligent storage array 995 generally represent any type or form of storage device or medium capable of storing data and/or other computer-readable instructions.

In certain embodiments, and with reference to example computing system 810 of FIG. 8, a communication interface, such as communication interface 822 in FIG. 8, may be used to provide connectivity between each client system 910, 920, and 930 and network 950. Client systems 910, 920, and 930 may be able to access information on server 940 or 945 using, for example, a web browser or other client software. Such software may allow client systems 910, 920, and 930 to access data hosted by server 940, server 945, storage devices 960(1)-(N), storage devices 970(1)-(N), storage devices 990(1)-(N), or intelligent storage array 995. Although FIG. 9 depicts the use of a network (such as the Internet) for exchanging data, the embodiments described and/or illustrated herein are not limited to the Internet or any particular network-based environment.

In at least one embodiment, all or a portion of one or more of the example embodiments disclosed herein may be encoded as a computer program and loaded onto and executed by server 940, server 945, storage devices 960(1)-(N), storage devices 970(1)-(N), storage devices 990(1)-(N), intelligent storage array 995, or any combination thereof. All or a portion of one or more of the example embodiments disclosed herein may also be encoded as a computer program, stored in server 940, run by server 945, and distributed to client systems 910, 920, and 930 over network 950.

As detailed above, computing system 810 and/or one or more components of network architecture 900 may perform and/or be a means for performing, either alone or in combination with other elements, one or more steps of an example method for text classification.

While the foregoing disclosure sets forth various embodiments using specific block diagrams, flowcharts, and examples, each block diagram component, flowchart step, operation, and/or component described and/or illustrated herein may be implemented, individually and/or collectively, using a wide range of hardware, software, or firmware (or any combination thereof) configurations. In addition, any disclosure of components contained within other components should be considered example in nature since many other architectures can be implemented to achieve the same functionality.

In some examples, all or a portion of example system 100 in FIG. 1 may represent portions of a cloud-computing or network-based environment. Cloud-computing environments may provide various services and applications via the Internet. These cloud-based services (e.g., software as a service, platform as a service, infrastructure as a service, etc.) may be accessible through a web browser or other remote interface. Various functions described herein may be provided through a remote desktop environment or any other cloud-based computing environment.

In various embodiments, all or a portion of example system 100 in FIG. 1 may facilitate multi-tenancy within a cloud-based computing environment. In other words, the software modules described herein may configure a computing system (e.g., a server) to facilitate multi-tenancy for one or more of the functions described herein. For example, one or more of the software modules described herein may program a server to enable two or more clients (e.g., customers) to share an application that is running on the server. A server programmed in this manner may share an application, operating system, processing system, and/or storage system among multiple customers (i.e., tenants). One or more of the modules described herein may also partition data and/or configuration information of a multi-tenant application for each customer such that one customer cannot access data and/or configuration information of another customer.

According to various embodiments, all or a portion of example system 100 in FIG. 1 may be implemented within a virtual environment. For example, the modules and/or data described herein may reside and/or execute within a virtual machine. As used herein, the term "virtual machine" generally refers to any operating system environment that is abstracted from computing hardware by a virtual machine manager (e.g., a hypervisor). Additionally or alternatively, the modules and/or data described herein may reside and/or execute within a virtualization layer. As used herein, the term "virtualization layer" generally refers to any data layer and/or application layer that overlays and/or is abstracted from an operating system environment. A virtualization layer may be managed by a software virtualization solution (e.g., a file system filter) that presents the virtualization layer as though it were part of an underlying base operating system. For example, a software virtualization solution may redirect calls that are initially directed to locations within a base file system and/or registry to locations within a virtualization layer.

In some examples, all or a portion of example system 100 in FIG. 1 may represent portions of a mobile computing environment. Mobile computing environments may be implemented by a wide range of mobile computing devices, including mobile phones, tablet computers, e-book readers, personal digital assistants, wearable computing devices (e.g., computing devices with a head-mounted display, smartwatches, etc.), and the like. In some examples, mobile computing environments may have one or more distinct features, including, for example, reliance on battery power, presenting only one foreground application at any given time, remote management features, touchscreen features, location and movement data (e.g., provided by Global Positioning Systems, gyroscopes, accelerometers, etc.), restricted platforms that restrict modifications to system-level configurations and/or that limit the ability of third-party software to inspect the behavior of other applications, controls to restrict the installation of applications (e.g., to only originate from approved application stores), etc. Various functions described herein may be provided for a mobile computing environment and/or may interact with a mobile computing environment.

In addition, all or a portion of example system 100 in FIG. 1 may represent portions of, interact with, consume data produced by, and/or produce data consumed by one or more systems for information management. As used herein, the term "information management" may refer to the protection, organization, and/or storage of data. Examples of systems for information management may include, without limitation, storage systems, backup systems, archival systems, replication systems, high availability systems, data search systems, virtualization systems, and the like.

In some embodiments, all or a portion of example system 100 in FIG. 1 may represent portions of, produce data protected by, and/or communicate with one or more systems for information security. As used herein, the term "information security" may refer to the control of access to protected data. Examples of systems for information security may include, without limitation, systems providing managed security services, data loss prevention systems, identity authentication systems, access control systems, encryption systems, policy compliance systems, intrusion detection and prevention systems, electronic discovery systems, and the like.

According to some examples, all or a portion of example system 100 in FIG. 1 may represent portions of, communicate with, and/or receive protection from one or more systems for endpoint security. As used herein, the term "endpoint security" may refer to the protection of endpoint systems from unauthorized and/or illegitimate use, access, and/or control. Examples of systems for endpoint protection may include, without limitation, anti-malware systems, user authentication systems, encryption systems, privacy systems, spam-filtering services, and the like.

A computer readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

The process parameters and sequence of steps described and/or illustrated herein are given by way of example only and can be varied as desired. For example, while the steps illustrated and/or described herein may be shown or discussed in a particular order, these steps do not necessarily need to be performed in the order illustrated or discussed. The various example methods described and/or illustrated herein may also omit one or more of the steps described or illustrated herein or include additional steps in addition to those disclosed.

While various embodiments have been described and/or illustrated herein in the context of fully functional computing systems, one or more of these example embodiments may be distributed as a program product in a variety of forms, regardless of the particular type of computer-readable media used to actually carry out the distribution. The embodiments disclosed herein may also be implemented using software modules that perform certain tasks. These software modules may include script, batch, or other executable files that may be stored on a computer-readable storage medium or in a computing system. In some embodiments, these software modules may configure a computing system to perform one or more of the example embodiments disclosed herein.

In addition, one or more of the modules described herein may transform data, physical devices, and/or representations of physical devices from one form to another. For example, one or more of the modules recited herein may receive a training dataset to be transformed, transform the training dataset into features, output a result of the transformation to a storage or output device, use the result of the transformation to train a machine-learning model, and store the result of the transformation in a server or database. Additionally or alternatively, one or more of the modules recited herein may transform a processor, volatile memory, non-volatile memory, and/or any other portion of a physical computing device from one form to another by executing on the computing device, storing data on the computing device, and/or otherwise interacting with the computing device.

The preceding description has been provided to enable others skilled in the art to best utilize various aspects of the example embodiments disclosed herein. This example description is not intended to be exhaustive or to be limited to any precise form disclosed. Many modifications and variations are possible without departing from the scope of the present disclosure. The embodiments disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

Thus, from one perspective, there has now been described a computer-implemented method for text classification that may include prompting, by a computing device, a large language model (LLM) to extract a set of explanatory statements for a training dataset, wherein each explanatory statement describes a difference between a grouping of samples within the training dataset. The method may also include prompting, by the computing device, the LLM to generate a set of queries based on the set of explanatory statements, wherein each query evaluates the difference described by an explanatory statement. The method may include training, by the computing device, a machine-learning (ML) model using the set of queries as features. Furthermore, the method may include classifying, by the computing device using the ML model, an unknown sample as a security threat. Finally, the method may include performing, by the computing device, a security action to mitigate the security threat. Various other methods, systems, and computer-readable media are also disclosed.

Further examples of feature combinations taught by the present disclosure are set out in the following numbered clauses:
1. A computer-implemented method for text classification, at least a portion of the method being performed by a computing device comprising at least one processor, the method comprising:
   prompting, by the computing device, a large language model (LLM) to extract a set of explanatory statements for a training dataset, wherein each explanatory statement describes a difference between a grouping of samples within the training dataset;
   prompting, by the computing device, the LLM to generate a set of queries based on the set of explanatory statements, wherein each query evaluates the difference described by an explanatory statement;
   training, by the computing device, a machine-learning (ML) model using the set of queries as features;
   classifying, by the computing device using the ML model, an unknown sample as a security threat; and
   performing, by the computing device, a security action to mitigate the security threat.
2. The computer-implemented method of clause 1, wherein the training dataset comprises multiple groupings of samples, wherein each sample in a single grouping of samples is labeled a different classification.
3. The computer-implemented method of clause 2, wherein prompting the LLM to extract the set of explanatory statements comprises:
   prompting the LLM to extract the explanatory statement for the single grouping of samples; and
   prompting the LLM to extract another explanatory statement for at least one other grouping of samples.
4. The computer-implemented method of clause 2, wherein the explanatory statement for the single grouping of samples provides an explanation for different classifications of each sample in the single grouping of samples.
5. The computer-implemented method of clause 1, wherein training the ML model comprises at least one of:
   transforming each sample of the training dataset into a vector using the set of queries;
   transforming each sample of a testing dataset into the vector using the set of queries;
   training the ML model with the transformed training dataset;
   evaluating an accuracy of the ML model using the transformed testing dataset; and
   applying an optimization technique to the ML model.
6. The computer-implemented method of clause 5, wherein applying the optimization technique to the ML model comprises at least one of:
   weighting the training dataset;
   training the ML model with a portion of the training dataset;
   pruning the ML model;
   modifying a first prompt used to extract the set of explanatory statements;
   modifying a second prompt used to generate the set of queries; and
   performing a different machine-learning technique to train the ML model.
7. The computer-implemented method of clause 1, wherein performing the security action comprises at least one of:
   alerting an administrator of the security threat;
   quarantining the unknown sample;
   performing an additional analysis of the unknown sample;
   blocking the unknown sample; and
   identifying an attribute used to classify the unknown sample as the security threat.
8. The computer-implemented method of clause 1, further comprising prompting the LLM to generate a security report for the security threat, wherein the security report includes an applicable set of explanatory statements based on the classification of the unknown sample using the ML model.
9. A system for text classification, the system comprising:
   an extraction module, stored in memory, that prompts, by a computing device, a large language model (LLM) to extract a set of explanatory statements for a training dataset, wherein each explanatory statement describes a difference between a grouping of samples within the training dataset;
   a generation module, stored in memory, that prompts, by the computing device, the LLM to generate a set of queries based on the set of explanatory statements, wherein each query evaluates the difference described by an explanatory statement;
   a training module, stored in memory, that trains, by the computing device, a machine-learning (ML) model using the set of queries as features;
   a classification module, stored in memory, that classifies, by the computing device using the ML model, an unknown sample as a security threat;
   a security module, stored in memory, that performs, by the computing device, a security action to mitigate the security threat; and
   at least one physical processor that executes the extraction module, the generation module, the training module, the classification module, and the security module.
10. The system of clause 9, wherein the training dataset comprises multiple groupings of samples, wherein each sample in a single grouping of samples is labeled a different classification.
11. The system of clause 10, wherein the extraction module prompts the LLM to extract the set of explanatory statements by:
   prompting the LLM to extract the explanatory statement for the single grouping of samples; and
   prompting the LLM to extract another explanatory statement for at least one other grouping of samples.
12. The system of clause 10, wherein the explanatory statement for the single grouping of samples provides an explanation for different classifications of each sample in the single grouping of samples.
13. The system of clause 9, wherein the training module trains the ML model by at least one of:
   transforming each sample of the training dataset into a vector using the set of queries;
   transforming each sample of a testing dataset into the vector using the set of queries;
   training the ML model with the transformed training dataset;
   evaluating an accuracy of the ML model using the transformed testing dataset; and
   applying an optimization technique to the ML model.
14. The system of clause 13, wherein applying the optimization technique to the ML model comprises at least one of:
   weighting the training dataset;
   training the ML model with a portion of the training dataset;
   pruning the ML model;
   modifying a first prompt used to extract the set of explanatory statements;
   modifying a second prompt used to generate the set of queries; and
   performing a different machine-learning technique to train the ML model.
15. The system of clause 9, wherein the security module performs the security action by at least one of:
   alerting an administrator of the security threat;
   quarantining the unknown sample;
   performing an additional analysis of the unknown sample;
   blocking the unknown sample; and
   identifying an attribute used to classify the unknown sample as the security threat.
16. The system of clause 9, wherein the security module further prompts the LLM to generate a security report for the security threat, wherein the security report includes an applicable set of explanatory statements based on the classification of the unknown sample using the ML model.
17. A computer-readable medium comprising one or more computer-executable instructions that, when executed by at least one processor of a computing device, cause the computing device to:
   prompt, by the computing device, a large language model (LLM) to extract a set of explanatory statements for a training dataset, wherein each explanatory statement describes a difference between a grouping of samples within the training dataset;
   prompt, by the computing device, the LLM to generate a set of queries based on the set of explanatory statements, wherein each query evaluates the difference described by an explanatory statement;
   train, by the computing device, a machine-learning (ML) model using the set of queries as features;
   classify, by the computing device using the ML model, an unknown sample as a security threat; and
   perform, by the computing device, a security action to mitigate the security threat.
18. The computer-readable medium of clause 17, wherein the training dataset comprises multiple groupings of samples, wherein each sample in a single grouping of samples is labeled a different classification.
19. The computer-readable medium of clause 17, wherein the computer-executable instructions cause the computing device to train the ML model by at least one of:
   transforming each sample of the training dataset into a vector using the set of queries;
   transforming each sample of a testing dataset into the vector using the set of queries;
   training the ML model with the transformed training dataset;
   evaluating an accuracy of the ML model using the transformed testing dataset; and
   applying an optimization technique to the ML model.
20. The computer-readable medium of clause 17, wherein the computer-executable instructions cause the computing device to further prompt the LLM to generate a security report for the security threat, wherein the security report includes an applicable set of explanatory statements based on the classification of the unknown sample using the ML model.

## Claims

1. A computer-implemented method for text classification, at least a portion of the method being performed by a computing device comprising at least one processor, the method comprising:
prompting, by the computing device, a large language model, LLM, to extract a set of explanatory statements for a training dataset, wherein each explanatory statement describes a difference between a grouping of samples within the training dataset;
prompting, by the computing device, the LLM to generate a set of queries based on the set of explanatory statements, wherein each query evaluates the difference described by an explanatory statement;
training, by the computing device, a machine-learning, ML, model using the set of queries as features;
classifying, by the computing device using the ML model, an unknown sample as a security threat; and
performing, by the computing device, a security action to mitigate the security threat.

2. The computer-implemented method of claim 1, wherein the training dataset comprises multiple groupings of samples, wherein each sample in a single grouping of samples is labeled a different classification.

3. The computer-implemented method of claim 2, wherein prompting the LLM to extract the set of explanatory statements comprises:
prompting the LLM to extract the explanatory statement for the single grouping of samples; and
prompting the LLM to extract another explanatory statement for at least one other grouping of samples.

4. The computer-implemented method of claim 2 or 3, wherein the explanatory statement for the single grouping of samples provides an explanation for different classifications of each sample in the single grouping of samples.

5. The computer-implemented method of any preceding claim, wherein training the ML model comprises at least one of:
transforming each sample of the training dataset into a vector using the set of queries;
transforming each sample of a testing dataset into the vector using the set of queries;
training the ML model with the transformed training dataset;
evaluating an accuracy of the ML model using the transformed testing dataset; and
applying an optimization technique to the ML model.

6. The computer-implemented method of claim 5, wherein applying the optimization technique to the ML model comprises at least one of:
weighting the training dataset;
training the ML model with a portion of the training dataset;
pruning the ML model;
modifying a first prompt used to extract the set of explanatory statements;
modifying a second prompt used to generate the set of queries; and
performing a different machine-learning technique to train the ML model.

7. The computer-implemented method of any preceding claim, wherein performing the security action comprises at least one of:
alerting an administrator of the security threat;
quarantining the unknown sample;
performing an additional analysis of the unknown sample;
blocking the unknown sample; and
identifying an attribute used to classify the unknown sample as the security threat.

8. The computer-implemented method of any preceding claim, further comprising prompting the LLM to generate a security report for the security threat, wherein the security report includes an applicable set of explanatory statements based on the classification of the unknown sample using the ML model.

9. A system for text classification, the system comprising:
an extraction module, stored in memory, that prompts, by a computing device, a large language model, LLM, to extract a set of explanatory statements for a training dataset, wherein each explanatory statement describes a difference between a grouping of samples within the training dataset;
a generation module, stored in memory, that prompts, by the computing device, the LLM to generate a set of queries based on the set of explanatory statements, wherein each query evaluates the difference described by an explanatory statement;
a training module, stored in memory, that trains, by the computing device, a machine-learning, ML, model using the set of queries as features;
a classification module, stored in memory, that classifies, by the computing device using the ML model, an unknown sample as a security threat;
a security module, stored in memory, that performs, by the computing device, a security action to mitigate the security threat; and
at least one physical processor that executes the extraction module, the generation module, the training module, the classification module, and the security module.

10. The system of claim 9, wherein the training dataset comprises multiple groupings of samples, wherein each sample in a single grouping of samples is labeled a different classification.

11. The system of claim 10, wherein the extraction module prompts the LLM to extract the set of explanatory statements by:
prompting the LLM to extract the explanatory statement for the single grouping of samples; and
prompting the LLM to extract another explanatory statement for at least one other grouping of samples.

12. The system of claim 9 or 10, wherein the explanatory statement for the single grouping of samples provides an explanation for different classifications of each sample in the single grouping of samples.

13. The system of any of claims 9 to 12, wherein the training module trains the ML model by at least one of:
transforming each sample of the training dataset into a vector using the set of queries;
transforming each sample of a testing dataset into the vector using the set of queries;
training the ML model with the transformed training dataset;
evaluating an accuracy of the ML model using the transformed testing dataset; and
applying an optimization technique to the ML model.

14. The system of claim 13, wherein applying the optimization technique to the ML model comprises at least one of:
weighting the training dataset;
training the ML model with a portion of the training dataset;
pruning the ML model;
modifying a first prompt used to extract the set of explanatory statements;
modifying a second prompt used to generate the set of queries; and
performing a different machine-learning technique to train the ML model.

15. The system of any of claims 9 to 14, wherein the security module performs the security action by at least one of:
alerting an administrator of the security threat;
quarantining the unknown sample;
performing an additional analysis of the unknown sample;
blocking the unknown sample; and
identifying an attribute used to classify the unknown sample as the security threat.
